# FASCICULE DE BREVET EUROPEEN

(11) **EP 3 947 950 B1**
(45) Date de publication et mention de la délivrance du brevet: **18.01.2023**
(21) Numéro de dépôt: 20722348.8
(22) Date de dépôt: 05.05.2020
(51) Int. Cl.: F02K 1/70

(54) **PORTE POUR INVERSEUR DE POUSSEE D'ENSEMBLE PROPULSIF D'AERONEF, COMPORTANT UN DEFLECTEUR SOUPLE**
TÜR FÜR SCHUBUMKEHRVORRICHTUNG EINER FLUGZEUGANTRIEBSANORDNUNG MIT EINER FLEXIBLEN ABLENKPLATTE
DOOR FOR THRUST REVERSER OF AN AIRCRAFT PROPULSION ASSEMBLY, COMPRISING A FLEXIBLE BAFFLE

(30) Priorité: 14.05.2019 FR 1905011
(43) Date de publication de la demande: 09.02.2022
(73) Titulaire: Safran Nacelles, 76700 Gonfreville-l'Orcher (FR)
(72) Inventeur: GONIDEC, Patrick, 77550 MOISSY-CRAMAYEL (FR); CLERE, Gérard, 77550 MOISSY-CRAMAYEL (FR); PHI, Alexandre, 77550 MOISSY-CRAMAYEL (FR)
(74) Mandataire: Brevalex
(86) Numéro de dépôt international: PCT/EP2020/062450
(87) Numéro de publication internationale: WO 2020/229232

(56) Documents cités:
- EP-A1- 0 882 881
- EP-B1- 0 882 881
- FR-A1- 2 618 853
- FR-A1- 2 916 484
- US-A- 5 230 213

## Description

### Domaine technique

La présente invention se rapporte au domaine des inverseurs de poussée pour ensemble propulsif d'aéronef, en particulier des inverseurs à portes. De manière générale, les portes d'un inverseur de poussée sont prévues pour rediriger vers l'amont de l'ensemble propulsif une partie de la poussée générée par une turbomachine telle qu'un turboréacteur à double flux, produisant ainsi une contre-poussée destinée à diminuer la distance de freinage de l'aéronef lors de son atterrissage.

La présente invention s'applique aussi bien aux inverseurs dont les portes sont agencées en aval de l'ensemble propulsif, afin de rediriger un mélange des flux primaire et secondaire générés par la turbomachine, qu'aux inverseurs dont les portes sont configurées pour rediriger uniquement le flux secondaire.

Plus spécifiquement, la présente invention concerne un déflecteur d'une porte d'inverseur, aussi appelé « becquet » ou « becquet déflecteur », dont la fonction est d'orienter vers l'amont de l'ensemble propulsif le flux - mélangé ou secondaire - redirigé par la porte.

### État de la technique antérieure

Une porte d'inverseur de poussée est généralement montée pivotante entre une position fermée dans laquelle elle permet à l'ensemble propulsif de générer une poussée, et une position ouverte dans laquelle elle est disposée de manière à rediriger un gaz circulant dans l'ensemble propulsif en direction d'une ouverture radiale de l'inverseur, de manière à générer une contre-poussée.

Dans l'état de la technique antérieure, une telle porte est typiquement équipée d'un déflecteur formant une paroi rigide fixée au droit d'une extrémité de la face interne de la porte afin d'orienter le flux vers l'amont de l'ensemble propulsif.

Un déflecteur de porte d'inverseur est d'autant plus efficace pour générer une contre-poussée que sa dimension est importante. Or son encombrement, et/ou sa disposition au travers de la veine d'écoulement de gaz lorsque la porte est fermée, nuisent aux performances de l'ensemble propulsif en jet direct, c'est-à-dire lorsque l'aéronef doit être propulsé.

Pour pallier cet inconvénient, il est connu d'équiper l'inverseur d'un mécanisme apte à rétracter le déflecteur lorsque la porte est refermée, par exemple un mécanisme tel que décrit dans le document FR 2 618 853 A1 ou tel que décrit dans le document EP 0 882 881 A1.

Les mécanismes de rétraction conventionnels nécessitent des moyens de guidage et d'articulation relativement complexes, lourds et peu fiables.

La présente invention vise à surmonter les inconvénients des déflecteurs de l'art antérieur en procurant une porte d'inverseur pourvue d'un déflecteur capable d'assurer de bonnes performances en inversion de poussée tout en limitant les pertes de charge en jet direct. Notamment, un but de la présente invention est de procurer une porte ayant un déflecteur qui satisfasse à des critères de fiabilité, de simplicité, et/ou de légèreté.

### Exposé de l'invention

A cet effet, l'invention a pour objet une porte pour inverseur de poussée d'ensemble propulsif d'aéronef selon la revendication 1, agencée pour être montée pivotante par rapport à une structure fixe dudit inverseur entre :
- une position fermée, permettant à l'ensemble propulsif de générer une poussée, et
- une position ouverte, dans laquelle la porte est apte à rediriger un gaz circulant dans l'ensemble propulsif en direction d'une ouverture radiale de l'inverseur de manière à générer une contre-poussée.

Cette porte comprend un déflecteur agencé pour orienter vers l'amont de l'ensemble propulsif une partie du gaz redirigé par cette porte lorsque celle-ci est ouverte, le déflecteur comprenant une paroi directrice et au moins deux parois latérales reliant la paroi directrice à la porte.

Typiquement, le déflecteur peut comprendre au moins une première paroi latérale agencée sur une première extrémité circonférentielle de la paroi directrice et une deuxième paroi latérale agencée sur une deuxième extrémité circonférentielle de la paroi directrice, la deuxième extrémité circonférentielle de la paroi directrice étant circonférentiellement opposée à la première extrémité de cette paroi directrice.

Selon l'invention, la paroi directrice et/ou les parois latérales comprennent un matériau souple permettant au déflecteur de prendre :
- une position dépliée lorsque la porte est ouverte, dans laquelle la paroi directrice est agencée en regard d'un flux du gaz redirigé par la porte ouverte de manière à orienter ce flux vers l'amont de l'ensemble propulsif, et
- une position pliée lorsque la porte est fermée, dans laquelle la paroi directrice et les parois latérales du déflecteur sont rabattues sur une face interne de la porte.

Un déflecteur comprenant un matériau souple lui permet notamment de se déplier et se plier successivement lors des changements de position de la porte, d'assurer la fonction d'orientation de flux de gaz lorsque la porte est ouverte, et de réduire la masse du déflecteur par rapport à un déflecteur en composite conventionnel.

La souplesse du déflecteur permet de dimensionner celui-ci de manière à assurer de manière optimale la fonction d'orientation de flux en jet inversé, tout en limitant les pertes de charge en jet direct. En effet, le pliage du déflecteur permet typiquement de loger celui-ci dans un espace restreint situé entre :
- la partie de la porte recevant le déflecteur, c'est-à-dire la partie de la porte sur laquelle le déflecteur est fixé et contre laquelle il est rabattu (en position pliée), et
- la partie de la structure fixe de l'inverseur en vis-à-vis du déflecteur lorsque la porte est fermée.

Typiquement mais de manière non limitative, la partie de la porte recevant le déflecteur peut être formée par une extrémité de la face interne de la porte située la plus en amont de l'ensemble propulsif par rapport aux autres parties de cette face interne. En général, cette partie de la porte est celle qui effectue la plus grande course radiale lorsque la porte change de position, par rapport aux autres parties de la porte.

De manière non limitative, ladite partie de la structure fixe en vis-à-vis du déflecteur lorsque la porte est fermée peut être formée par une face radialement externe d'un bord de déviation de cette structure fixe.

L'encombrement réduit du déflecteur en position pliée permet d'améliorer les performances de l'ensemble propulsif en jet direct, c'est-à-dire porte fermée, par rapport à un déflecteur conventionnel de dimension identique, a fortiori lorsque ce déflecteur n'est pas rétractable. En effet, avec un déflecteur conventionnel, il est souvent nécessaire de créer une pente longitudinale dans la porte pour permettre de mieux alimenter le déflecteur en jet inversé. Cette pente, généralement dénommée « cavité », induit en jet direct des pertes de charge importantes dans la veine. Le déflecteur souple de l'invention permet de réduire considérablement la taille d'une telle cavité voire de la supprimer sans nuire aux performances d'inversion de poussée.

Le matériau souple du déflecteur peut être un textile tel qu'un tissu comprenant, par exemple, des fibres organiques du type chlorofibres, fluorofibres, fibres acryliques, fibres phénoliques, fibres d'aramide, d'alcool polyvinylique, de polyéthylène, de polypropylène, de polysulfure de phénylène, de viscose, de polyamide, de polyester, de polyétheréthercétone (PEEK), de polyétherimide, de polyazole, etc., ou bien des fibres inorganiques du type fibres céramiques comme des fibres de carbure de silicium, de carbure de bore, des fibres céramiques à base d'alumine, etc., ou bien une combinaison de telles fibres.

Un tel matériau permet d'obtenir la tenue structurale requise, et la tenue à des paramètres environnementaux du déflecteur tels que la température et/ou les fluides auxquels le déflecteur est exposé.

Dans un mode de réalisation, le déflecteur peut comprendre une pluralité de parois latérales formant avec la paroi directrice des cellules qui se suivent circonférentiellement, chaque cellule étant délimitée par une partie de la paroi directrice et par deux desdites parois latérales, ces parois latérales étant agencées pour guider ledit flux de gaz vers la paroi directrice.

Une telle structure à cellules multiples s'apparente à une structure à membrane dans laquelle les efforts transitent tangentiellement à la membrane. De manière générale, pour une cellule donnée, si la partie de la paroi directrice délimitant cette cellule est maintenue par ses extrémités circonférentielles, cette partie de paroi directrice adoptera sensiblement sous charge une forme de secteur sphérique dans l'hypothèse d'un maintien en un point par extrémité, ou cylindrique dans l'hypothèse d'un maintien sur un segment de droite de chaque extrémité. Cette forme peut être modifiée en adaptant la géométrie de la cellule. Pour créer un obstacle le long du sommet de la porte et former ainsi un becquet déflecteur, il est possible selon ce mode de réalisation de juxtaposer les cellules circonférentiellement, c'est-à-dire dans le sens de l'envergure de la porte.

Une telle structure à cellules multiples permet d'améliorer les performances du déflecteur en jet inversé, c'est-à-dire porte ouverte, notamment en termes de guidage du flux de gaz en limitant la dispersion de ce flux, et en termes de stabilisation du déflecteur grâce à la meilleure répartition des efforts exercés sur la paroi directrice par l'écoulement de gaz et à une meilleure orientation de ces efforts dans le matériau formant le déflecteur. Par ailleurs, la présence de plusieurs cellules circonférentiellement adjacentes permet de distribuer circonférentiellement ces efforts sur toute la paroi directrice, de sorte que chaque partie de la paroi directrice délimitant une cellule donnée oriente vers l'amont de l'ensemble propulsif une partie respective de l'écoulement de gaz. Il en résulte une meilleure stabilité et une meilleure efficacité du déflecteur.

De plus, l'invention permet de plier le déflecteur sans mécanisme de rétraction ou du moins sans mettre en œuvre un mécanisme de rétractation aussi complexe que les mécanismes de rétraction conventionnels. L'invention permet ainsi de simplifier l'inverseur et de réduire sa masse globale tout en procurant une porte et un déflecteur fiables et performants.

Selon une première variante de réalisation, le déflecteur peut être configuré pour se déplier sous l'action du flux de gaz lorsque la porte passe de la position fermée à la position ouverte, et/ou pour se plier sous l'action d'une compression du déflecteur entre la porte et la structure fixe de l'inverseur lorsque la porte passe de la position ouverte à la position fermée.

Cette première variante permet de s'affranchir de tout mécanisme de rétractation, et plus généralement de tout dispositif de commande de position du déflecteur, pour son pliage et/ou son dépliage.

Selon une deuxième variante de réalisation, la porte peut comprendre un dispositif de commande de la position du déflecteur, ce dispositif de commande étant configuré pour plier le déflecteur lorsque la porte passe de la position ouverte à la position fermée et/ou pour déplier le déflecteur lorsque la porte passe de la position fermée à la position ouverte.

Dans un mode de réalisation de cette deuxième variante, le dispositif de commande peut comprendre un organe de transmission solidaire de l'un parmi le déflecteur et la structure fixe de l'inverseur, cet organe de transmission étant configuré pour être mis en mouvement par l'autre parmi le déflecteur et la structure fixe de l'inverseur :
- de manière à exercer un effort de pliage sur l'une au moins desdites parois latérales lorsque la porte passe de la position ouverte à la position fermée, cet effort de pliage tendant à rabattre cette paroi latérale sur la face interne de la porte, entraînant un rabattement sur cette face interne de la paroi directrice et des autres parois latérales, et/ou
- de manière à exercer un effort de dépliage sur l'une au moins desdites parois latérales lorsque la porte passe de la position fermée à la position ouverte, cet effort de dépliage tendant à modifier l'inclinaison de cette paroi latérale par rapport à la face interne de la porte, entraînant un dépliage du déflecteur.

Un tel dispositif de commande ne nécessite pas des organes aussi complexes et lourds qu'un mécanisme de rétraction conventionnel, notamment car les efforts requis pour ployer le déflecteur, compte tenu de sa souplesse, sont typiquement inférieurs aux efforts requis pour rétracter un déflecteur rigide conventionnel. Compte tenu de la souplesse du déflecteur, il peut typiquement s'avérer suffisant d'appliquer ledit effort de pliage ou de dépliage uniquement sur les parois latérales situées au niveau des flancs de la porte voire sur une seule de ces parois latérales.

En outre, un tel dispositif de commande peut être utilisé uniquement pour assister ou initier le pliage du déflecteur, ce pliage pouvant être réalisé en partie sous l'action du déplacement de la porte par compression du déflecteur entre la porte et la structure fixe de l'inverseur.

De même, un tel dispositif de commande peut être utilisé uniquement pour assister ou initier le dépliage du déflecteur, ce dépliage pouvant être réalisé en partie sous l'action du flux de gaz.

Plus généralement, la première et la deuxième variante de réalisation décrites ci-dessus peuvent être combinées. Par exemple, le dispositif de commande peut être configuré uniquement pour assurer le pliage du déflecteur, son dépliage étant dans ce cas réalisé sous l'action du flux de gaz. Inversement, le dispositif de commande peut être configuré uniquement pour assurer le dépliage du déflecteur, son pliage étant dans ce cas réalisé sous l'action du déplacement de la porte par compression du déflecteur entre la porte et la structure fixe de l'inverseur.

Dans un autre mode de réalisation, le dispositif de commande peut comprendre un bandeau, ce bandeau comprenant une partie centrale fixée sur la paroi directrice du déflecteur et deux extrémités fixées sur deux parois latérales externes parmi lesdites au moins deux parois latérales du déflecteur. Dans ce mode de réalisation, le bandeau peut être configuré de sorte que, lorsque la porte passe de la position ouverte à la position fermée, la partie centrale du bandeau soit écrasée par la structure fixe de l'inverseur ou par un élément porté par la structure fixe de l'inverseur de manière à exercer un effort de traction sur lesdites extrémités de ce bandeau, cet effort de traction tendant à rabattre lesdites parois latérales externes du déflecteur sur la face interne de la porte, entraînant un rabattement sur cette face interne des autres parois latérales du déflecteur. Par exemple, lorsque la porte est du type actionnable par un vérin pour passer de la position ouverte à la position fermée, ledit élément porté par la structure fixe de l'inverseur peut être ce vérin.

Un tel bandeau forme un dispositif de commande simplifié et pouvant être intégralement fabriqué avec un textile.

Le matériau souple du bandeau 32 peut être un textile tel qu'un tissu comprenant, par exemple, des fibres organiques du type chlorofibres, fluorofibres, fibres acryliques, fibres phénoliques, fibres d'aramide, d'alcool polyvinylique, de polyéthylène, de polypropylène, de polysulfure de phénylène, de viscose, de polyamide, de polyester, de polyétheréthercétone (PEEK), de polyétherimide, de polyazole, etc., ou bien des fibres inorganiques du type fibres céramiques comme des fibres de carbure de silicium, de carbure de bore, des fibres céramiques à base d'alumine, etc., ou bien une combinaison de telles fibres.

L'invention concerne aussi un inverseur de poussée pour ensemble propulsif d'aéronef, comprenant une structure fixe et au moins une porte telle que définie ci-dessus, l'au moins une porte étant montée pivotante par rapport à la structure fixe entre :
- une position fermée, permettant à l'ensemble propulsif de générer une poussée, et
- une position ouverte, dans laquelle la porte est apte à rediriger un gaz circulant dans l'ensemble propulsif en direction d'une ouverture radiale de l'inverseur de manière à générer une contre-poussée.

L'invention concerne aussi un ensemble propulsif d'aéronef, comprenant un tel inverseur de poussée.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique en coupe axiale d'un ensemble propulsif d'aéronef ;
[Fig. 2] est une demi-vue schématique en coupe axiale d'un inverseur de poussée à portes conforme à l'invention, en configuration de jet inversé ;
[Fig. 3] est une demi-vue schématique en coupe axiale de l'inverseur de poussée à portes de la figure 2, en configuration de jet direct ;
[Fig. 4] est une vue schématique en perspective d'un inverseur de poussée à coquilles conforme à l'invention, en configuration de jet inversé ;
[Fig. 5] est une vue schématique en perspective d'une porte d'un inverseur de poussée à coquilles comportant un déflecteur conforme à l'invention, cette figure montrant un dispositif de pliage du déflecteur à l'aide d'un bandeau souple ;
[Fig. 6] est une vue schématique partielle en perspective d'une porte d'un inverseur de poussée comportant un déflecteur conforme à l'invention, cette figure montrant un dispositif de commande de la position du déflecteur;
[Fig. 7] est une vue schématique en coupe axiale d'un inverseur de poussée conforme à l'invention, en configuration de jet direct ;
[Fig. 8] est une vue schématique en perspective d'un déflecteur multi-cellules pour porte d'inverseur de poussée conforme à l'invention, montrant une paroi directrice de ce déflecteur déformée par un écoulement de gaz ;
[Fig. 9] est une vue schématique en perspective d'une porte d'inverseur de poussée conforme à l'invention, montrant un déflecteur multi-cellules en position dépliée ;
[Fig. 10] est une vue schématique en perspective d'une cellule d'un déflecteur de porte d'inverseur de poussée conforme à l'invention, comprenant des renforts et des moyens de fixation du déflecteur.

### Description détaillée de modes de réalisation

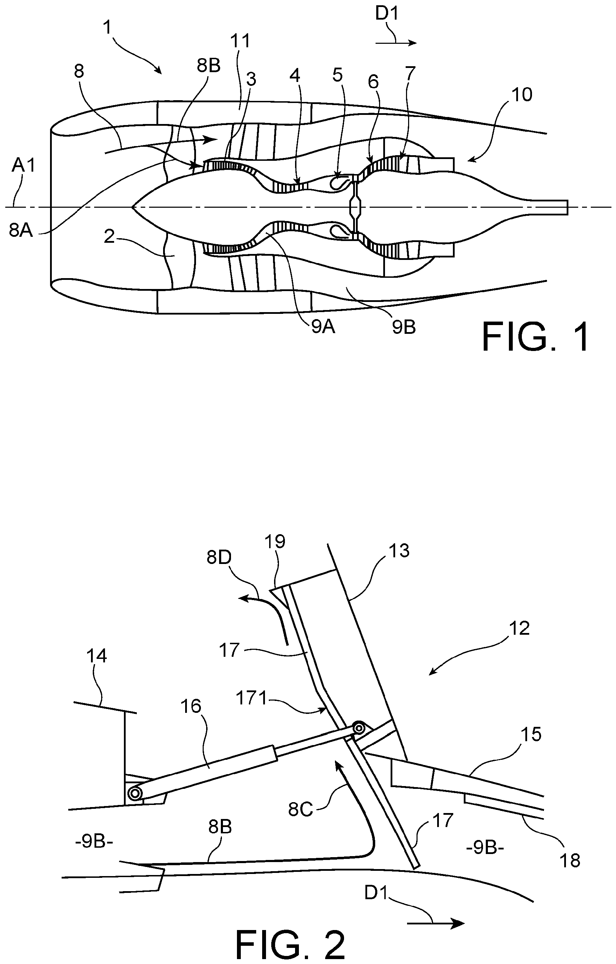

L'invention concerne un ensemble propulsif 1 d'aéronef (non représenté) tel que représenté à la figure 1. Cet ensemble propulsif 1 comprend un turboréacteur 10 à double flux caréné par une nacelle 11.

Le turboréacteur 10 présente un axe central longitudinal A1 autour duquel s'étendent ses différents composants, en l'occurrence, de l'amont vers l'aval du turboréacteur 10, une soufflante 2, un compresseur basse pression 3, un compresseur haute pression 4, une chambre de combustion 5, une turbine haute pression 6 et une turbine basse pression 7.

Les compresseurs 3 et 4, la chambre de combustion 5 et les turbines 6 et 7 forment un générateur de gaz.

Par la suite, les termes « amont » et « aval » sont définis par rapport à une direction principale D1 d'écoulement d'air à travers l'ensemble propulsif 1 lorsque celui-ci est propulsé.

De manière conventionnelle, lors du fonctionnement du turboréacteur 10, un écoulement d'air 8 pénètre dans l'ensemble propulsif 1 par une entrée d'air en amont de la nacelle 11, traverse la soufflante 2 puis se divise en un flux primaire 8A central et un flux secondaire 8B. Le flux primaire 8A s'écoule dans une veine principale 9A de circulation des gaz traversant les compresseurs 3 et 4, la chambre de combustion 5 et les turbines 6 et 7. Le flux secondaire 8B s'écoule quant à lui dans une veine secondaire 9B entourant le générateur de gaz du turboréacteur 10 et délimitée radialement vers l'extérieur par la nacelle 11.

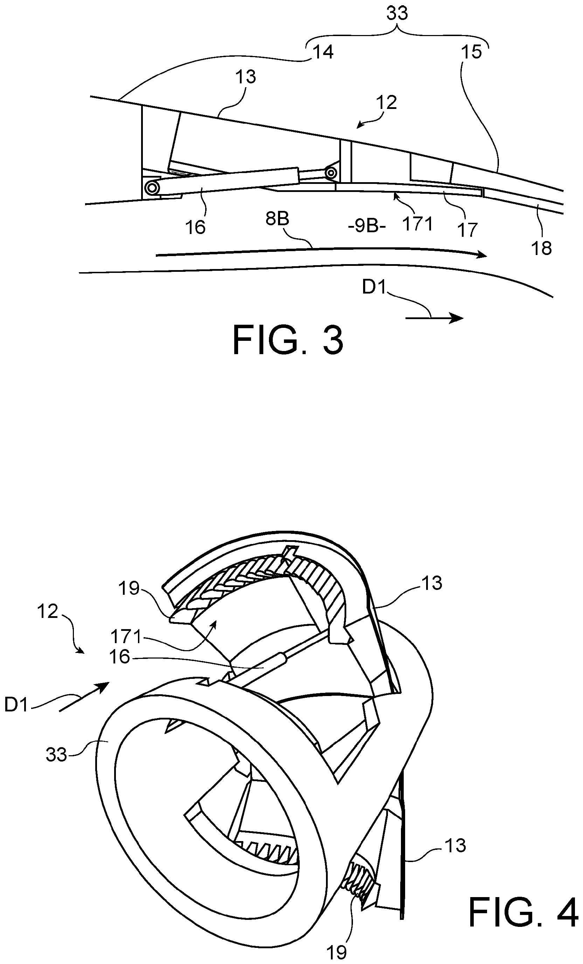

Bien que la figure 1 ne fasse pas apparaître un inverseur de poussée, cet ensemble propulsif 1 peut être équipé d'un inverseur de poussée 12 tel qu'illustré aux figures 2 et 3.

L'inverseur de poussée 12 permet, lors de l'atterrissage de l'aéronef, de générer une contre-poussée en redirigeant tout ou partie du flux secondaire 8B vers l'amont de l'ensemble propulsif 1.

Pour ce faire, l'inverseur de poussée 12 des figures 2 et 3 comprend une porte 13 montée pivotante par rapport à une structure fixe 33 de cet inverseur 12, cette structure fixe 33 comportant dans cet exemple un cadre avant 14 et une virole aval 15.

De manière connue en soi, le cadre avant 14 appartient typiquement à une section intermédiaire de la nacelle 11 et la virole aval 15 délimite un tronçon de sortie de la veine secondaire 9B.

Dans cet exemple, la porte 13 est montée pivotante sur la virole aval 15 et peut pivoter sous l'action d'un vérin 16 relié d'une part à la porte 13 et d'autre part au cadre avant 14.

Lorsque l'inverseur 12 est dans une configuration « jet direct », la porte 13 est dans la position fermée illustrée à la figure 3. Dans cette configuration, le flux secondaire 8B peut traverser la veine secondaire 9B d'amont en aval de manière à générer une poussée apte à propulser l'aéronef.

La porte 13 peut être placée dans la position ouverte illustrée à la figure 2 de manière à placer l'inverseur 12 dans une configuration « jet inversé ».

Le passage de la porte 13 de la position fermée à la position ouverte est réalisé par pivotement de la porte 13 par rapport à la structure fixe 33 de l'inverseur 12 sous l'action du vérin 16.

Lorsque l'inverseur 12 est dans la configuration jet inversé, c'est-à-dire lorsque la porte 13 est ouverte, au moins une partie 8C du flux secondaire 8B est redirigée par la porte 13 en direction d'une ouverture radiale de l'inverseur 12.

En effet, le pivotement de la porte 13 sur la virole aval 15 lors de son ouverture dégage une ouverture radiale entre la porte 13 et le cadre avant 14, et résulte en une disposition de la porte 13 dans laquelle une partie d'une paroi interne 17 de cette porte 13 s'étend au travers de la veine secondaire 9B, empêchant tout ou l'essentiel du flux secondaire 8B de poursuivre sa trajectoire vers la sortie de la veine secondaire 9B.

Compte tenu de l'orientation de la porte 13 en position ouverte, le gaz ainsi bloqué poursuit sa trajectoire en traversant l'ouverture radiale et en ayant au moins une composante dirigée vers l'amont de l'ensemble propulsif 1, générant ainsi une contre-poussée.

Lorsque la porte 13 est fermée (figure 3), celle-ci assure une continuité structurelle entre le cadre avant 14 et la virole aval 15 de sorte que la paroi interne 17 de cette porte 13 délimite la veine secondaire 9B continûment avec une paroi interne 18 de la virole aval 15.

Afin d'améliorer les performances de l'inverseur 12 en jet inversé, la porte 13 est équipée d'un déflecteur 19.

De manière générale, le déflecteur 19 est agencé pour orienter vers l'amont de l'ensemble propulsif 1 la partie 8C du gaz redirigé par la porte 13 ouverte. Dans l'exemple de la figure 2, le déflecteur 19 est fixé au droit de la paroi interne 17 de la porte 13, en une extrémité de cette paroi interne 17 opposée à son extrémité s'étendant dans la veine secondaire 9B. Le déflecteur 19 permet d'orienter vers l'amont de l'ensemble propulsif 1 la partie 8C du gaz en provenance de la veine secondaire 9B et s'écoulant le long de la paroi interne 17 de la porte 13 (voir flèche 8D sur la figure 2).

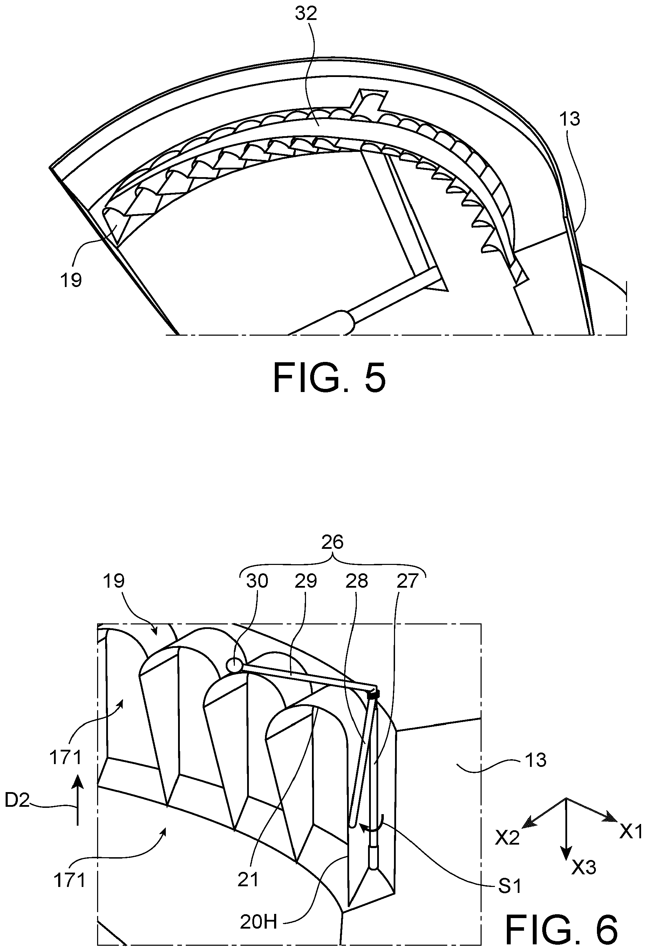

Le principe de l'invention s'applique aussi bien à un inverseur à portes prévu pour rediriger vers l'amont de l'ensemble propulsif 1 uniquement le flux secondaire, comme dans les exemples des figures 1 à 3, qu'à un inverseur à portes - aussi appelé inverseur à coquilles - prévu pour rediriger vers l'amont de l'ensemble propulsif 1 à la fois le flux primaire et le flux secondaire générés par le turboréacteur, comme dans les exemples des figures 4 et 5.

Selon l'invention, le déflecteur 19 comprend un matériau souple tel qu'un tissu comportant par exemple des fibres de céramique ou d'aramide, ce tissu pouvant être tissé ou sergé.

Des exemples de déflecteurs 19 conformes à l'invention sont décrits ci-après en référence aux figures 4 à 10.

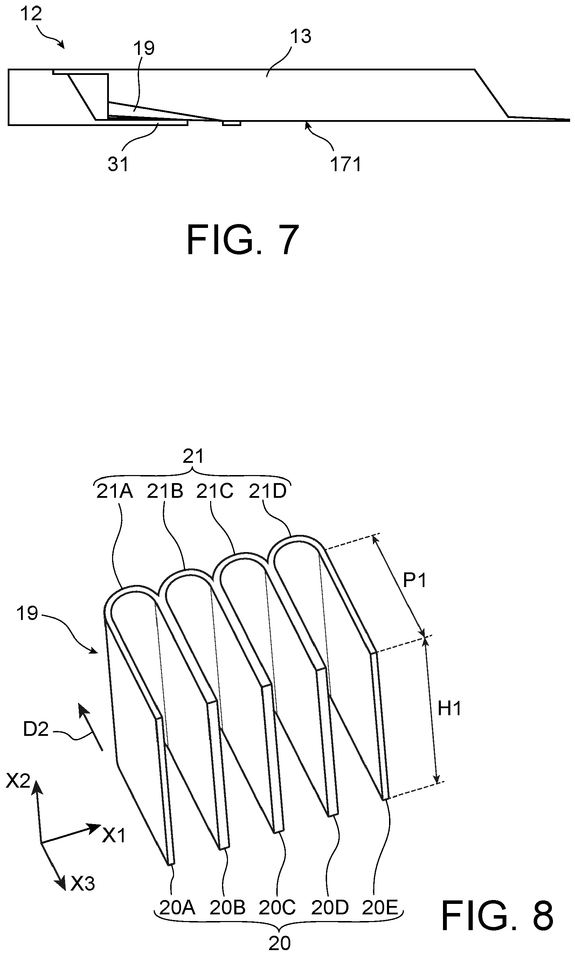

Dans l'exemple de la figure 8, le déflecteur 19 comprend une pluralité de parois latérales 20A-20E ainsi qu'une paroi directrice 21 formant des cellules.

Dans cet exemple, chaque cellule est délimitée par deux des parois latérales 20A-20E et par une partie 21A-21D de la paroi directrice 21. En allant de la gauche vers la droite de la figure 8, le déflecteur 19 comprend :
- une première cellule délimitée par les parois latérales 20A et 20B et par une partie 21A de la paroi directrice 21,
- une deuxième cellule délimitée par les parois latérales 20B et 20C et par une partie 21B de la paroi directrice 21,
- une troisième cellule délimitée par les parois latérales 20C et 20D et par une partie 21C de la paroi directrice 21, et
- une quatrième cellule délimitée par les parois latérales 20D et 20E et par une partie 21D de la paroi directrice 21.

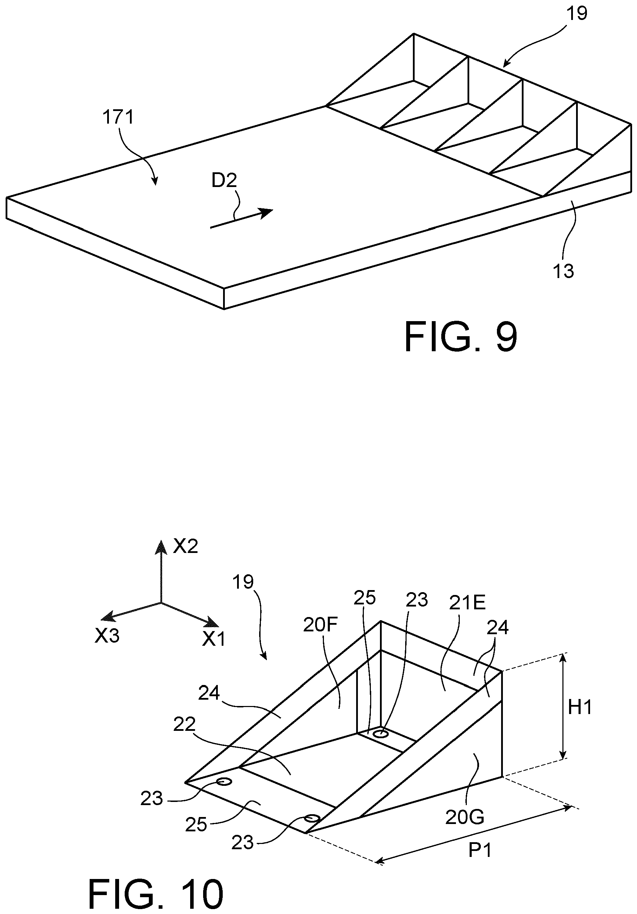

Les parois latérales 20A-20E du déflecteur 19 de la figure 8 sont représentées schématiquement avec une forme sensiblement carrée dans le plan X2-X3. Afin d'optimiser leur stabilité sous charge, les parois latérales du déflecteur 19 peuvent avoir une forme sensiblement triangulaire dans le plan X2-X3 tel qu'illustré dans les exemples des figures 9 et 10, de sorte que la hauteur H1 de la paroi latérale soit nulle en entrée de cellule et atteigne sa valeur maximale au niveau de la paroi directrice 21.

En référence au repère X1-X2-X3 de la figure 8, les parois latérales 20A-20E sont espacées les unes des autres le long d'une direction X1, la paroi directrice 21 présente une hauteur H1 selon une direction X2 et les cellules présentent une profondeur P1 selon une direction X3.

Dans cet exemple, la paroi directrice 21 ainsi que les parois latérales 20A-20E du déflecteur 19 sont toutes réalisées en matériau souple.

Lorsque le déflecteur 19 est fixé sur la porte 13 de l'inverseur 12, les cellules du déflecteur 19 se suivent circonférentiellement autour de l'axe A1 de l'ensemble propulsif 1. Autrement dit, la direction X1, le long de laquelle sont espacées les parois latérales 20A-20E les unes des autres, est une direction circonférentielle.

En référence aux figures 2 et 8, la fixation du déflecteur 19 sur la porte 13 est réalisée de sorte que, lorsque la porte 13 est en position ouverte (jet inversé), une partie au moins du flux 8C de gaz redirigé par la porte 13 pénètre dans les cellules du déflecteur 19 selon un sens d'écoulement D2.

Les parois latérales 20A-20E sont agencées pour guider cette partie du flux 8C de gaz vers la paroi directrice 21, plus précisément vers une face interne de la paroi directrice 21, située au-dedans des cellules du déflecteur 19.

Ainsi, lorsque la porte 13 est ouverte et que le déflecteur 19 est en position dépliée, la paroi directrice 21 du déflecteur 19 est agencée en regard de la partie du flux 8C de gaz pénétrant dans les cellules du déflecteur 19, la paroi directrice 21 orientant ainsi cette partie de flux 8C vers l'amont de l'ensemble propulsif 1.

Sur la figure 8, la paroi directrice 21 du déflecteur 19 est montrée déformée par l'écoulement de gaz auquel elle est soumise lors du fonctionnement de l'ensemble propulsif 1 en jet inversé. Cette déformation n'empêche aucunement le déflecteur 19 d'orienter le gaz vers l'amont de l'ensemble propulsif 1. D'une part, la différence de pression entre la face interne de la paroi directrice 21 et la face externe qui lui est opposée produit une tension du déflecteur 19 qui le stabilise. D'autre part, dans l'exemple de la figure 8, chaque partie 21A-21D de la paroi directrice 21 soumise à un écoulement de gaz selon le sens D2 se déforme de manière sensiblement uniforme sur toute la hauteur H1 de la paroi directrice 21, les parois latérales 20A-20E maintenant des extrémités respectives de chaque partie 21A-21D de la paroi directrice 21 sur toute la hauteur H1 de cette paroi directrice 21.

La figure 10 montre une cellule isolée d'un déflecteur 19 selon un autre mode de réalisation de l'invention. Cette cellule est délimitée par deux parois latérales 20F et 20G et par une partie 21E de paroi directrice de ce déflecteur 19. Dans cet exemple, les parois latérales 20F et 20G présentent une hauteur H1 variable le long de la direction X3, en l'occurrence une hauteur nulle en entrée de cellule, une hauteur maximale au niveau de la paroi directrice et une hauteur croissante entre l'entrée de la cellule et la paroi directrice.

La figure 10 fait apparaître une paroi de support 22 du déflecteur 19 destinée à être positionnée contre une face interne 171 de la porte 13, cette face interne 171 étant formée par ladite paroi interne 17 de la porte 13.

La fixation du déflecteur 19 sur la porte 13 peut être réalisée à l'aide de moyens de fixation 23 tels que des rivets traversant la paroi de support 22 du déflecteur 19 (voir figure 10).

Dans l'exemple de la figure 10, le déflecteur 19 comprend en outre des éléments de renfort. Ces éléments de renfort comportent d'une part des couches 24 de matériau souple fixées sur les parois latérales 20F et 20G et sur la partie 21E de la paroi directrice le long d'une partie périphérique de ces parois, c'est-à-dire le long d'une bordure libre du déflecteur 19. Ces éléments de renfort comportent d'autre part des couches 25 de matériau souple fixées sur la paroi de support 22 de manière à renforcer les parties de cette paroi de support qui reçoivent les moyens de fixation 23.

La figure 9 montre une porte 13 sur laquelle est fixé un déflecteur 19 formant quatre cellules du type illustré à la figure 10. Cette figure montre le déflecteur 19 non chargé, ce qui explique les formes anguleuses des cellules et la planéité de la paroi directrice. Lorsque le déflecteur 19 est chargé, les différentes parties de la paroi directrice, référencées 21A à 21D sur la figure 8, tendent à s'arrondir tel qu'illustré aux figures 4 à 6 et 8.

Le déflecteur 19 de la figure 9 peut être réalisé d'une seule pièce ou être formé à partir de plusieurs parties formant chacune une cellule telle que celle représentée à la figure 10.

Plus généralement, l'invention couvre un déflecteur 19 comprenant a minima une paroi directrice 21 et deux parois latérales 20 formant une cellule unique, étant entendu qu'une porte 13 d'inverseur 12 peut être équipée d'un unique déflecteur à cellule unique, de plusieurs déflecteurs à cellule unique agencés de manière à former ensemble un déflecteur multi-cellules, ou encore d'un déflecteur multi-cellules tel que ceux donnés en exemple aux figures 8 et 9.

En référence au déflecteur de la figure 8, il n'est pas représenté sur cette figure une paroi de support ni des moyens de fixation de ce déflecteur 19. Bien entendu, le déflecteur 19 de la figure 8 peut comprendre une paroi de support, des moyens de fixation et/ou des éléments de renfort similaires à ceux du déflecteur 19 de la figure 10. Alternativement, le déflecteur 19 de la figure 8 peut être fixé sur la porte 13 à l'aide de tout autre moyen lui permettant de remplir ses différentes fonctions, notamment la fonction d'orientation de flux.

Une fonction particulièrement avantageuse procurée par le déflecteur 19 de l'invention concerne son aptitude à changer de position ou d'état lorsque l'inverseur 12 passe de la configuration jet direct à la configuration jet inversé ou de la configuration jet inversé à la configuration jet direct.

Plus précisément, le matériau souple du déflecteur 19 lui permet de prendre une position dépliée lorsque la porte 13 est ouverte (figures 4, 5 et 8 à 10) et une position pliée lorsque la porte 13 est fermée (figure 7).

La figure 7 montre une porte 13 en position fermée. Dans cet exemple, le cadre avant 14 de l'inverseur 12 comprend un bord de déviation 31 en vis-à-vis du déflecteur 19 fixé sur la porte 13 lorsque celle-ci est en position fermée. Ce bord de déviation 31 comprend une face radialement externe formant une face de réception du déflecteur 19.

Dans cet exemple, la face radialement externe du bord de déviation 31 et la face interne 171 de la porte 13 délimitent entre elles un espace dont la dimension radiale est inférieure à la hauteur H1 de la paroi directrice 21 du déflecteur 19 lorsque ce déflecteur 19 est en position dépliée. Lors de la fermeture de la porte 13, la souplesse du déflecteur 19 lui permet de se plier au sein de cet espace restreint en rabattant la paroi directrice 21 et les parois latérales de ce déflecteur 19 sur la face interne 171 de la porte 13.

Dans l'exemple de la figure 7, la partie de la face interne 171 de la porte 13 sur laquelle le déflecteur 19 est fixé et contre laquelle il est rabattu présente une inclinaison par rapport à la partie de la face interne 171 destinée à délimiter la veine secondaire 9B. Lorsque le déflecteur 19 est en position dépliée, une telle inclinaison permet de recomprimer l'air au pied du déflecteur 19 ce qui engendre de la contre-poussée et stabilise le déflecteur 19. De plus, une telle inclinaison permet de loger le déflecteur 19 lorsque celui-ci est en position pliée.

Par comparaison avec une porte 13 ayant marche descendante formant une cavité dans laquelle le déflecteur 19 est logé (exemple de la figure 6), une telle inclinaison permet d'éviter une chute de pression totale et une perte de recompression lesquelles nuisent aux performances et à la stabilité du déflecteur 19.

D'autres agencements géométriques peuvent être envisagés. Ainsi, dans l'exemple de la figure 9, ces différentes parties de la face interne 171 sont situées dans un plan commun ne présentant pas de discontinuité entre elles. Cela permet de maximiser la surface du déflecteur 19 contribuant effectivement à orienter l'écoulement de gaz.

Un autre type d'agencement consiste à loger le déflecteur 19 dans une cavité réalisée dans la paroi interne 17 de la porte 13, tel qu'illustré sur les figures 4 à 6.

Toujours en référence au mode de réalisation de la figure 7, le déflecteur 19 est dans cet exemple configuré pour se déplier de manière autonome lorsque la porte 13 passe de la position fermée à la position ouverte. Ce dépliement autonome résulte des propriétés structurelles inhérentes au déflecteur 19, en particulier à l'agencement de ses différentes parois 20 et 21 qui exercent sur ce déflecteur 19 des efforts tendant à le déplier. De plus, lors de l'ouverture de la porte 13, le déflecteur 19 est soumis à un flux de gaz qui contribue aussi à son dépliage.

En référence à la figure 6, il est présenté un mode de réalisation dans lequel la porte 13 est équipée d'un dispositif de commande configuré pour plier le déflecteur 19 lorsque la porte 13 passe de la position ouverte à la position fermée.

Ce dispositif de commande comprend un organe de transmission 26 formant un triple bras de transmission.

Une première partie 27 de cet organe de transmission 26 est reliée à la porte 13 selon une liaison pivot de manière à autoriser une rotation de l'organe de transmission 26 autour d'un axe de pliage sensiblement parallèle à la direction de l'écoulement de gaz pénétrant dans les cellules du déflecteur 19.

Une deuxième partie 28 de l'organe de transmission 26, solidaire de la première partie 27, s'étend le long d'une paroi latérale 20H agencée en une extrémité circonférentielle de la paroi directrice 21 du déflecteur 19, selon une direction qui peut être soit oblique soit sensiblement perpendiculaire à la face interne 171 de la porte 13. Dans l'exemple de la figure 6, cette direction est oblique.

Une troisième partie 29 de l'organe de transmission 26, également solidaire de la première partie 27, est surmontée d'un pommeau 30. Cette troisième partie 29 est agencée de sorte que le pommeau 30 entre en contact avec une partie de la structure fixe de l'inverseur 12 lorsque la porte 13 passe de la position ouverte à la position fermée, cela de manière à entraîner l'organe de transmission 26 en rotation autour dudit axe de pliage, selon un sens de pliage S1.

Lors d'une telle rotation de l'organe de transmission 26, la deuxième partie 28 du bras de transmission 26 exerce un effort de pliage sur la paroi latérale 20H qui tend à rabattre cette paroi latérale 20H sur la face interne 171 de la porte 13, entraînant en cascade un rabattement sur cette face interne 171 des autres parois latérales et de la paroi directrice 21 du déflecteur 19.

Lorsque le système n'est pas chargé et que le déflecteur 19 est en position dépliée, la paroi directrice 21 est sensiblement perpendiculaire à la paroi latérale 20H. Dans ces conditions, il est avantageux de positionner le bras de transmission 28 sur la paroi latérale 20H le long de la médiatrice entre, d'une part, la ligne de raccordement de la paroi latérale 20H à la porte 13 et, d'autre part, la ligne de jonction entre la paroi directrice 21 et la paroi latérale 20H. Autrement dit, il est avantageux de positionner le bras de transmission 28 de sorte que celui-ci forme un angle d'environ 45° relativement à la face interne 171 de la porte 13. Lorsque le bras de transmission 28 entraîne la paroi latérale 20H contre la face interne 171 de la porte 13 de la position dépliée à la position pliée, une telle orientation de ce bras 28 permet de superposer de façon optimale la paroi latérale 20H et de la paroi directrice 21 l'une sur l'autre, ce qui permet de réduire l'encombrement du déflecteur 19 dans la position pliée et de minimiser son froissement.

Dans un mode de réalisation non représenté, l'organe de transmission 26 peut comprendre un mécanisme de rappel tendant à entraîner l'organe de transmission 26 en rotation autour dudit axe de pliage, selon un sens de dépliage opposé au sens de pliage S1, lorsque la porte passe de la position fermée à la position ouverte, c'est-à-dire lorsque le contact entre la structure fixe 33 de l'inverseur 12 et le pommeau 30 est libéré. Plus précisément, un tel mécanisme de rappel peut être agencé de sorte que, lors d'une telle rotation de l'organe de transmission 26, la deuxième partie 28 du bras de transmission 26 exerce sur la paroi latérale 20H un effort de dépliage. Pour ce faire, la deuxième partie 28 du bras de transmission 26 peut typiquement comprendre une partie s'étendant à l'intérieur de la cellule délimitée par la paroi latérale 20H et/ou peut être fixée à cette paroi latérale 20H. Un tel effort de dépliage tend à modifier l'inclinaison de cette paroi latérale 20H par rapport à la face interne 171 de la porte 13, entraînant en cascade un dépliage des autres parois latérales et de la paroi directrice 21 du déflecteur 19. Pour favoriser un tel entraînement en cascade, le déflecteur 19 souple peut être fabriqué de sorte à conserver une mémoire de son état déplié tendant à ramener le déflecteur 19 dans cet état.

Dans le mode de réalisation de la figure 5, le déflecteur 19 peut comprendre un bandeau 32 de matériau souple recouvrant sa paroi directrice 21. Ce bandeau 32 peut être fixé sur la face externe de la paroi directrice 21.

A titre d'exemple non limitatif, le bandeau 32 peut comprendre un matériau souple tel qu'un tissu comportant par exemple des fibres de céramique ou d'aramide, ce tissu pouvant être tissé ou sergé.

Un tel bandeau 32 peut être utilisé pour renforcer la paroi directrice 21 et améliorer encore davantage les performances de l'inverseur 12.

Dans cet exemple, le bandeau 32 forme un dispositif de commande de la position du déflecteur 19. A cet effet, le bandeau 32 est configuré pour plier le déflecteur 19 lorsque la porte 13 passe de la position ouverte à la position fermée.

En référence à la figure 5, le bandeau 32 est fixé sur la paroi directrice 21 et sur deux parois latérales 20 externes du déflecteur 19, ces deux parois latérales externes correspondants, dans l'illustration de la figure 8, aux parois latérales 20A et 20E.

Un tel bandeau 32 d'aide au pliage est particulièrement avantageux sur un inverseur à coquilles tel qu'illustré à la figure 4, dans lequel la fermeture des portes 13 est réalisée par un vérin 16 respectif. Typiquement, pour chaque porte 13, le vérin 16 s'étend centralement le long de la face interne 171 de la porte 13 lorsque celle-ci est en position fermée, de sorte que la fermeture de la porte 13 se traduit par un appui du vérin 16 contre une partie centrale de la paroi directrice 21 du déflecteur 19. Le bandeau 32, interposé entre la paroi directrice 21 du déflecteur 19 et le vérin 16, est ainsi déformé de sorte que ses extrémités sont dès lors soumises à un effort de traction entraînant un rabattement sur la face interne 171 de la porte 13 desdites parois latérales 20 externes du déflecteur 19 et, par suite, des autres parois latérales du déflecteur 19.

Un tel bandeau 32 forme un dispositif de pliage du déflecteur 19 qui est à la fois léger, robuste et facile à mettre en œuvre.

Dans un mode de réalisation non représenté, le dispositif de commande peut comprendre à la fois un bandeau 32 tel qu'illustré à la figure 5 et un organe de transmission 26 tel qu'illustré à la figure 6.

La figure 4 montre un inverseur de poussée 12 en configuration jet inversé, ayant deux portes 13 équipées chacune d'un déflecteur 19 conforme à l'invention.

L'invention n'est pas limitée aux modes de réalisation qui viennent d'être décrits. Par exemple, une partie seulement de la paroi directrice 21 et/ou des parois latérales 20 peut être réalisée dans un matériau souple tel que défini ci-dessus, une autre partie de ces parois 20 et/ou 21 pouvant comprendre un autre matériau, pourvu que le déflecteur 19 puisse être successivement plié et déplié lors des changements de position de la porte 13. Pour autre exemple, les cellules du déflecteur 19 peuvent être arasées pour former une paroi directrice 21 courbe lisse (p. ex. figure 4) ou rester non arasées en formant ainsi une paroi directrice 21 en redan (non représenté).

## Revendications

1. Porte (13) pour inverseur de poussée (12) d'ensemble propulsif (1) d'aéronef, cette porte (13) étant agencée pour être montée pivotante par rapport à une structure fixe (33) dudit inverseur entre :
- une position fermée permettant à l'ensemble propulsif (1) de générer une poussée, et
- une position ouverte, dans laquelle la porte (13) est apte à rediriger un gaz circulant dans l'ensemble propulsif (1) en direction d'une ouverture radiale de l'inverseur (12) de manière à générer une contre-poussée,
la porte (13) comprenant un déflecteur (19) agencé pour orienter vers l'amont de l'ensemble propulsif (1) une partie du gaz redirigé par cette porte (13) lorsque celle-ci est ouverte, le déflecteur (19) comprenant une paroi directrice (21) et au moins deux parois latérales (20) reliant la paroi directrice (21) à la porte (13), **caractérisée en ce que** la paroi directrice (21) et/ou les parois latérales (20) comprennent un matériau souple permettant au déflecteur (19) de prendre :
- une position dépliée lorsque la porte (13) est ouverte, dans laquelle la paroi directrice (21) est agencée en regard d'un flux dudit gaz redirigé par la porte (13) ouverte de manière à orienter ce flux vers l'amont de l'ensemble propulsif (1), et
- une position pliée lorsque la porte (13) est fermée, dans laquelle la paroi directrice (21) et les parois latérales (20) du déflecteur (19) sont rabattues sur une face interne (171) de la porte (13).

2. Porte (13) selon la revendication 1, dans laquelle le matériau souple du déflecteur (19) est un textile tel qu'un tissu.

3. Porte (13) selon la revendication 1 ou 2, dans laquelle le déflecteur (19) comprend une pluralité de parois latérales (20A-20E) formant avec la paroi directrice (21) des cellules qui se suivent circonférentiellement, chaque cellule étant délimitée par une partie (21A-21D) de la paroi directrice (21) et par deux desdites parois latérales (20A-20E), ces parois latérales (20A-20E) étant agencées pour guider ledit flux de gaz vers la paroi directrice (21).

4. Porte (13) selon l'une quelconque des revendications 1 à 3, comprenant un dispositif de commande (26, 32) de la position du déflecteur (19) configuré pour plier le déflecteur (19) lorsque la porte (13) passe de la position ouverte à la position fermée et/ou pour déplier le déflecteur (19) lorsque la porte (13) passe de la position fermée à la position ouverte.

5. Porte (13) selon la revendication 4, dans laquelle le dispositif de commande (26) comprend un organe de transmission solidaire de l'un parmi le déflecteur (19) et la structure fixe (33) de l'inverseur (12), cet organe de transmission étant configuré pour être mis en mouvement par l'autre parmi le déflecteur (19) et la structure fixe (33) de l'inverseur (12) :
- de manière à exercer un effort de pliage sur l'une (20H) au moins desdites parois latérales (20) lorsque la porte (13) passe de la position ouverte à la position fermée, cet effort de pliage tendant à rabattre cette paroi latérale (20H) sur la face interne (171) de la porte (13), entraînant un rabattement sur cette face interne de la paroi directrice (21) et des autres parois latérales, et/ou
- de manière à exercer un effort de dépliage sur l'une au moins desdites parois latérales (20) lorsque la porte (13) passe de la position fermée à la position ouverte, cet effort de dépliage tendant à modifier l'inclinaison de cette paroi latérale par rapport à la face interne (171) de la porte (13), entraînant un dépliage du déflecteur (19).

6. Porte (13) selon la revendication 4 ou 5, dans laquelle le dispositif de commande comprend un bandeau (32), ce bandeau (32) comprenant une partie centrale fixée sur la paroi directrice (21) du déflecteur (19) et deux extrémités fixées sur deux parois latérales externes parmi lesdites au moins deux parois latérales (20) du déflecteur (19), ce bandeau (32) étant configuré de sorte que, lorsque la porte (13) passe de la position ouverte à la position fermée, la partie centrale du bandeau (32) est écrasée par la structure fixe (33) de l'inverseur (12) ou par un élément porté par la structure fixe (33) de l'inverseur (12) de manière à exercer un effort de traction sur lesdites extrémités de ce bandeau (32), cet effort de traction tendant à rabattre lesdites parois latérales externes du déflecteur (19) sur la face interne (171) de la porte (13), entraînant un rabattement sur cette face interne (171) des autres parois latérales du déflecteur (19).

7. Inverseur de poussée (12) pour ensemble propulsif (1) d'aéronef, comprenant une structure fixe (33) et au moins une porte (13) selon l'une quelconque des revendications précédentes, l'au moins une porte (13) étant montée pivotante par rapport à la structure fixe (33) entre :
- une position fermée permettant à l'ensemble propulsif (1) de générer une poussée, et
- une position ouverte, dans laquelle la porte (13) est apte à rediriger un gaz circulant dans l'ensemble propulsif (1) en direction d'une ouverture radiale de l'inverseur (12) de manière à générer une contre-poussée.

8. Ensemble propulsif (1) d'aéronef, comprenant un inverseur de poussée (12) selon la revendication 7.

## Patentansprüche

1. Tür (13) für Schubumkehrvorrichtung (12) einer Antriebsanordnung (1) eines Flugzeugs, wobei die Tür (13) so angeordnet ist, dass sie in Bezug auf eine feststehende Struktur (33) der Umkehrvorrichtung zwischen:
- einer geschlossenen Stellung, die es der Antriebsanordnung (1) ermöglicht, einen Schub zu erzeugen, und
- einer geöffneten Stellung, in der die Tür (13) in der Lage ist, ein in der Antriebsanordnung (1) zirkulierendes Gas in Richtung einer radialen Öffnung der Umkehrvorrichtung (12) umzuleiten, um einen Gegenschub zu erzeugen,
schwenkbar angebracht werden kann,
wobei die Tür (13) eine Ablenkplatte (19) aufweist, die so angeordnet ist, dass sie einen Teil des durch die Tür (13) umgeleiteten Gases stromaufwärts der Antriebsanordnung (1) lenkt, wenn diese geöffnet ist, wobei die Ablenkplatte (19) eine Leitwand (21) und mindestens zwei Seitenwände (20) aufweist, die die Leitwand (21) mit der Tür (13) verbinden, **dadurch gekennzeichnet, dass** die Leitwand (21) und/oder die Seitenwände (20) ein flexibles Material aufweisen, das es der Ablenkplatte (19) ermöglicht:
- bei geöffneter Tür (13) eine aufgeklappte Stellung einzunehmen, in der die Leitwand (21) gegenüber einem Strom des durch die geöffnete Tür (13) umgeleiteten Gases angeordnet ist, um diesen Strom stromaufwärts der Antriebsanordnung (1) zu lenken, und
- bei geschlossener Tür (13) eine zusammengeklappte Stellung einzunehmen, in der die Leitwand (21) und die Seitenwände (20) der Ablenkplatte (19) auf eine Innenfläche (171) der Tür (13) umgeklappt werden.

2. Tür (13) nach Anspruch 1, wobei das flexible Material der Ablenkplatte (19) aus einem Textilmaterial wie z.B. einem Gewebe besteht.

3. Tür (13) nach Anspruch 1 oder 2, wobei die Ablenkplatte (19) eine Mehrzahl von Seitenwänden (20A-20E) aufweist, die mit der Leitwand (21) Zellen bilden, welche über den Umfang aufeinander folgen, wobei jede Zelle durch einen Teil (21A-21D) der Leitwand (21) sowie durch zwei der Seitenwände (20A-20E) begrenzt ist, wobei die Seitenwände (20A-20E) so angeordnet sind, dass sie den Gasstrom in Richtung der Leitwand (21) führen.

4. Tür (13) nach einem der Ansprüche 1 bis 3, mit einer Steuervorrichtung (26, 32) für die Stellung der Ablenkplatte (19), die dazu ausgeführt ist, die Ablenkplatte (13) zusammenzuklappen, wenn die Tür (13) von der geöffneten Stellung in die geschlossene Stellung übergeht, und/oder die Ablenkplatte (19) aufzuklappen, wenn die Tür (13) von der geschlossenen Stellung in die geöffnete Stellung übergeht.

5. Tür (13) nach Anspruch 4, wobei die Steuervorrichtung (26) ein Übertragungsteil aufweist, das mit entweder der Ablenkplatte (19) oder der feststehenden Struktur (33) der Umkehrvorrichtung (12) fest verbunden ist, wobei das Übertragungsteil dazu ausgeführt ist, durch das andere von entweder der Ablenkplatte (19) oder der feststehenden Struktur (33) der Umkehrvorrichtung (12) in Bewegung gesetzt zu werden:
- um eine Kraft zum Zusammenklappen auf mindestens eine (20H) der Seitenwände (20) auszuüben, wenn die Tür (13) von der geöffneten Stellung in die geschlossene Stellung übergeht, wobei die Kraft zum Zusammenklappen tendenziell die Seitenwand (20H) auf die Innenfläche (171) der Tür (13) klappt, wodurch die Leitwand (21) und die anderen Seitenwände auf die Innenfläche umgeklappt werden, und/oder
- um eine Kraft zum Aufklappen auf mindestens eine der Seitenwände (20) auszuüben, wenn die Tür (13) von der geschlossenen Stellung in die geöffnete Stellung übergeht, wobei die Kraft zum Aufklappen tendenziell die Neigung der Seitenwand in Bezug auf die Innenfläche (171) der Tür (13) verändert, wodurch die Ablenkplatte (19) umgeklappt wird.

6. Tür (13) nach Anspruch 4 oder 5, wobei die Steuervorrichtung eine Leiste (32) aufweist, wobei die Leiste (32) einen Mittelteil, der an der Leitwand (21) der Ablenkplatte (19) befestigt ist, und zwei Enden aufweist, die an zwei äußeren Seitenwänden von den mindestens zwei Seitenwänden (20) der Ablenkplatte (19) befestigt sind, wobei die Leiste (32) derart ausgeführt ist, dass, wenn die Tür (13) von der geöffneten Stellung in die geschlossene Stellung übergeht, der Mittelteil der Leiste (32) von der feststehenden Struktur (33) der Umkehrvorrichtung (12) oder von einem durch die feststehende Struktur (33) der Umkehrvorrichtung (12) getragenen Element so zusammengedrückt wird, dass auf die Enden des Bandes (32) eine Zugkraft ausgeübt wird, wobei die Zugkraft tendenziell die äußeren Seitenwände der Ablenkplatte (19) auf die Innenfläche (171) der Tür (13) klappt, wodurch die anderen Seitenwände der Ablenkplatte (19) auf die Innenfläche (171) umgeklappt werden.

7. Schubumkehrvorrichtung (12) für eine Antriebsanordnung (1) eines Flugzeugs, mit einer feststehenden Struktur (33) und mindestens einer Tür (13) nach einem der vorhergehenden Ansprüche, wobei die mindestens eine Tür (13) in Bezug auf die feststehende Struktur (33) zwischen:
- einer geschlossenen Stellung, die es der Antriebsanordnung (1) ermöglicht, einen Schub zu erzeugen, und
- einer geöffneten Stellung, in der die Tür (13) in der Lage ist, ein in der Antriebsanordnung (1) zirkulierendes Gas in Richtung einer radialen Öffnung der Umkehrvorrichtung (12) umzulenken, um einen Gegenschub zu erzeugen,
schwenkbar angebracht ist.

8. Flugzeugantriebsanordnung (1) mit einer Schubumkehrvorrichtung (12) nach Anspruch 7.

## Claims

1. Door (13) for a thrust reverser (12) of an aircraft propulsion assembly (1), this door (13) being arranged to be mounted pivotably with respect to a fixed structure (33) of said reverser between:
- a closed position enabling the propulsion assembly (1) to generate a thrust, and
- an open position, wherein the door (13) is able to redirect a gas flowing in the propulsion assembly (1) in the direction of a radial opening of the reverser (12) so as to generate a counterthrust,
the door (13) comprising a baffle (19) arranged to orient, towards the upstream side of the propulsion assembly (1), a part of the gas redirected by this door (13) when the latter is open, the baffle (19) comprising a directing wall (21) and at least two lateral walls (20) connecting the directing wall (21) to the door (13), **characterised in that** the directing wall (21) and/or the lateral walls (20) comprise a flexible material enabling the baffle (19) to adopt:
- an unfolded position when the door (13) is open, wherein the directing wall (21) is arranged opposite a flow of said gas redirected by the open door (13) so as to orient this flow towards the upstream side of the propulsion assembly (1), and
- a folded position when the door (13) is closed, wherein the directing wall (21) and the lateral walls (20) of the baffle (19) are closed onto an internal face (171) of the door (13).

2. Door (13) according to claim 1, wherein the flexible material of the baffle (19) is a textile such as a fabric.

3. Door (13) according to claim 1 or 2, wherein the baffle (19) comprises a plurality of lateral walls (20A-20E) forming, with the directing wall (21), cells that follow each other circumferentially, each cell being delimited by a part (21A-21D) of the directing wall (21) and by two of said lateral walls (20A-20E), these lateral walls (20A-20E) being arranged to guide said gas flow towards the directing wall (21).

4. Door (13) according to any one of claims 1 to 3, comprising a device (26, 32) for controlling the position of the baffle (19) configured to fold the baffle (19) when the door (13) passes from the open position to the closed position and/or to unfold the baffle (19) when the door (13) passes from the closed position to the open position.

5. Door (13) according to claim 4, wherein the control device (26) comprises a transmission member integral with one of either the baffle (19) or the fixed structure (33) of the reverser (12), this transmission member being configured to be moved by the other one of either the baffle (19) or the fixed structure (33) of the reverser (12):
- so as to exert a folding force on at least one (20H) of said lateral walls (20) when the door (13) passes from the open position to the closed position, this folding force tending to close this lateral wall (20H) onto the internal face (171) of the door (13), causing a closing onto this internal face of the directing wall (21) and of the other lateral walls, and/or
- so as to exert an unfolding force on at least one of said lateral walls (20) when the door (13) passes from the closed position to the open position, this unfolding force tending to modify the inclination of this lateral wall with respect to the internal face (171) of the door (13), causing an unfolding of the baffle (19).

6. Door (13) according to claim 4 or 5, wherein the control device comprises a fascia (32), this fascia (32) comprising a central part secured to the directing wall (21) of the baffle (19) and two ends secured to two external lateral walls from said at least two lateral walls (20) of the baffle (19), this fascia (32) being configured so that, when the door (13) passes from the open position to the closed position, the central part of the fascia (32) is crushed by the fixed structure (33) of the reverser (12) or by an element carried by the fixed structure (33) of the reverser (12) so as to exert a traction force on said ends of this fascia (32), this traction force tending to close said external lateral walls of the baffle (19) onto the internal face (171) of the door (13), causing a closure onto this internal face (171) of the other lateral walls of the baffle (19).

7. Thrust reverser (12) for an aircraft propulsion assembly (1), comprising a fixed structure (33) and at least one door (13) according to any one of the preceding claims, the at least one door (13) being mounted pivotably with respect to the fixed structure (13) between:
- a closed position enabling the propulsion assembly (1) to generate a thrust, and
- an open position, wherein the door (13) is able to redirect a gas flowing in the propulsion assembly (1) in the direction of a radial opening of the reverser (12) so as to generate a counterthrust.

8. Aircraft propulsion assembly (1), comprising a thrust reverser (12) according to claim 7.
